# EUROPÄISCHE PATENTANMELDUNG

(11) **EP 1 685 903 A1**
(43) Veröffentlichungstag der Anmeldung: **02.08.2006**
(21) Anmeldenummer: 06001207.7
(22) Anmeldetag: 20.01.2006
(51) Int. Cl.: B01L 9/02, E04F 17/08

(54) **Technikraumausstattung mit mehreren Arbeitsplätzen**

(30) Priorität: 27.01.2005 DE 202005001262 U
(71) Anmelder: Laborbau Systeme Hemling GmbH, 48683 Ahaus (DE)
(72) Erfinder: Bernd Hemling, 48683 Ahaus (DE)
(74) Vertreter: Grosse, Rainer

(57) **Zusammenfassung**

Die Erfindung betrifft eine Technikraumausstattung mit mehreren Arbeitsplätzen, von denen mehrere als Reihe nebeneinander und die als mehrere Reihen hintereinanderliegend angeordnet sind, und mit einem an oder unterhalb der Decke des Raumes angeordneten Medienversorgungssystem, das mehrere Deckenkanäle zur Aufnahme von Medienversorgungsleitungen aufweist, die zu den Arbeitsplätzen zugeordneten Medienanschlüssen des Medienversorgungssystems führen. Es ist vorgesehen, dass die Längserstreckung der Deckenkanäle (19) parallel oder im Wesentlichen parallel zur Längserstreckung der Reihen (15) verläuft.

## Beschreibung

Die Erfindung betrifft eine Technikraumausstattung mit mehreren Arbeitsplätzen, von denen mehrere als Reihe nebeneinander und die als mehrere Reihen hintereinander liegend angeordnet sind, und mit einem an- oder unterhalb der Decke des Raumes angeordneten Medienversorgungssystem, das mehrere Deckenkanäle zur Aufnahme von Medienversorgungsleitungen aufweist, die zu den Arbeitsplätzen zugeordneten Medienanschlüssen des Medienversorgungssystems führen.

Derartige Technikraumausstattungen sind bekannt. Sie werden beispielsweise in Labors, Werkstätten oder Unterrichtsräumen von Schulen eingesetzt, um insbesondere im naturwissenschaftlichen Unterricht Arbeitsplätze, also Schülerarbeitsplätze, mit Medien zu versorgen. Diese Medien werden an Medienanschlüssen zur Verfügung gestellt und können über entsprechende Kupplungen den Arbeitsplätzen zugeführt werden. Bei den "Medienanschlüssen" handelt es sich insbesondere um Gasanschlüsse, Elektrizitätsanschlüsse (beispielsweise Netzspannung und Kleinspannungen), Computernetzwerkanschlüsse, Datenanschlüsse, Antennenanschlüsse, Flüssigkeitsanschlüsse (beispielsweise Leitungswasser). Derartige Technikraumausstattungen sind ebenfalls in Laborräumen vorgesehen. Stets lassen sich die einzelnen Arbeitsplätze auf einfache Weise mit den Medien versorgen, wobei die von der Decke erfolgende Medienversorgung den Bodenbereich des Raumes nicht beeinträchtigt.

Der Erfindung liegt die Aufgabe zugrunde, einen vorteilhaften Aufbau einer Technikraumausstattung anzugeben.

Diese Aufgabe wird erfindungsgemäß dadurch gelöst, dass die Längserstreckung der Deckenkanäle parallel oder im Wesentlichen parallel zur Längserstreckung der Reihen verläuft. Aufgrund der erfindungsgemäßen Anordnung verlaufen demgemäß die reihenförmig nebeneinander liegenden Arbeitsplätze in Bezug auf ihre Reihenlängserstreckung parallel zu den Deckenkanälen, die die Medienversorgungsleitungen aufnehmen und denen die Medienanschlüsse zugeordnet sind. Mittels eines Deckenkanals kann somit eine gesamte Reihe von nebeneinander liegenden Arbeitsplätzen versorgt werden. Die hier in Rede stehenden Technikräume weisen zumeist einen Lehrerbereich auf, das heißt ein Lehrerpult oder dergleichen sowie gegebenenfalls eine Tafel. Die Arbeitsplätze sind derart ausgerichtet, dass die Blickrichtung der an den Arbeitsplätzen sitzenden Person in Richtung auf den Lehrerbereich weist. Die Längserstreckung der Reihen der erwähnten Arbeitsplätzen verlaufen quer zu diesen Blickrichtungen. Demgemäß verlaufen auch die Deckenkanäle quer zu den Blickrichtungen der an den Arbeitsplätzen sitzenden Personen. Der Lehrerbereich befindet sich bevorzugt vor einer fensterlosen Wand des Raumes. Die Tafel ist insbesondere an dieser Wand angeordnet. Mindestens eine an diese Wand unter einem Winkel von vorzugsweise 90° angrenzende Seitenwand des Raumes ist mit Fenstern versehen, das heißt, der Tageslichteinfall in den Raum erfolgt in Richtung der Längserstreckung der Reihen der Arbeitsplätze. Da sich die Deckenkanäle ebenfalls in dieser Richtung erstrecken, treten sie hinsichtlich ihres Schattenwurfes nicht störend in Erscheinung.

Nach einer Weiterbildung der Erfindung ist vorgesehen, dass die Medienanschlüsse an den Deckenkanälen angeordnet sind. Mithin befinden sie sich direkt am jeweiligen Kanal, sodass sie sich in Übergreifhöhe befinden, das heißt, in einer Höhe, die von einer erwachsenen Person mittlerer Größe nicht ohne Hilfsmittel (zum Beispiel Steighilfe), erreicht werden kann. Alternativ ist es auch möglich, sie so hoch anzuordnen, dass eine stehende Person sie mit ausgestrecktem Arm noch erreichen kann. Im letzteren Falle ist eine Steighilfe nicht erforderlich. Wichtig ist jedoch, dass die Medienanschlüsse kein Hindernis, insbesondere Fluchthindernis, darstellen.

Nach einer Weiterbildung der Erfindung ist vorgesehen, dass die Medienanschlüsse höhenverstellbar angeordnet sind. Mittels einer Höhenverstelleinrichtung lassen sie sich vorzugsweise aus einer Übergreifhöhe in eine Greifhöhe verlagern. In der unteren Stellung weisen sie ihre Betriebsposition auf; in der oberen Stellung nehmen sie eine Parkstellung ein.

Ferner ist es vorteilhaft, wenn die Medienanschlüsse an Säulen und/oder Traversen angeordnet sind. Die erwähnten Medienversorgungsleitungen verlaufen innerhalb mindestens eines Deckenkanals und treten von dort in die Säulen beziehungsweise Traversen ein, an denen sich die Medienanschlüsse oder zumindest ein Medienanschluss befinden/befindet. Insbesondere ist vorgesehen, dass die Medienversorgungsleitungen die Säulen und/oder Traversen durchsetzen, sodass sie nicht sichtbar sind.

Ferner ist es vorteilhaft, wenn sich die Säulen zumindest in Arbeitsposition in Richtung auf die Arbeitsplätze erstrecken. Insbesondere ist vorgesehen, dass es sich bei den Säulen um Vertikalsäulen handelt, die jeweils im Bereich ihres unteren Endes die Medienanschlüsse aufweisen. Sie sind in Richtung auf die Arbeitsplätze, insbesondere auf Tischanordnungen, gerichtet, sodass auf diesen Tischen zum Beispiel Experimente und dergleichen durchgeführt werden können, wobei die Medien von oben her den Arbeitstischen durch an die Medienanschlüsse angeschlossene Versorgungsleitungen/Versorgungsschläuche zugeführt werden.

Eine Weiterbildung der Erfindung sieht vor, dass die Traversen als Horizontaltraversen ausgebildet sind. Im Gegensatz zu den vorstehend erwähnten Säulen, die in vertikaler Richtung von der Decke her kommend auf den jeweiligen Arbeitsplatz weisen, verlaufen die Traversen hinsichtlich ihrer Längserstreckung horizontal, das heißt, sie bilden Horizontalträger, an denen die Medienanschlüsse angeordnet sind, wobei an einer Horizontaltraverse vorzugsweise an mehreren Stellen Medienanschlüsse vorgesehen sind, um mehrere Arbeitsplätze zu versorgen.

Bevorzugt sind die Säulen und/oder die Traversen verschwenkbar gelagert. Aufgrund dieser Verschwenkbarkeit lassen sie sich in ihrer Höhe verstellen, um die Medienanschlüsse in eine gewünschte Höhenposition verbringen zu können.

Eine Weiterbildung der Erfindung sieht vor, dass die Säulen für die Höhenverstellbarkeit der Medienanschlüsse entlang ihrer Längserstreckung verlagerbar geführt sind und/oder entlang ihrer Längserstreckung teleskopierbar sind. Bei den bereits erwähnten Vertikalsäulen, die die Medienanschlüsse im Bereich ihres unteren Endes tragen, führt eine Vertikalverlagerung einer derartigen Säule dazu, dass die Medienanschlüsse in der Höhe eingestellt werden können. Sofern die Säule als Teleskopiersäule ausgebildet ist, lässt sie sich in ihrer Länge verändern, sodass auf diese Art und Weise die Medienanschlüsse in die gewünschte Höhenposition verbracht werden können.

Eine Weiterbildung der Erfindung sieht vor, dass die Säulen und/oder Traversen an den Deckenkanälen oder im Bereich der Deckenkanäle angeordnet sind. Mithin lassen sich Säulen und/oder Traversen direkt an den Deckenkanälen befestigen oder es ist alternativ vorgesehen, dass sie an der Decke des Technikraumes -gegebenenfalls unter Zwischenschaltung von Tragelementen, wie zum Beispiel Hängehaltern- befestigt sind und dass die Deckenkanäle benachbart zu ihnen verlaufen, um die Versorgungsleitungen den Säulen oder Traversen und damit den dort vorhandenen Medienanschlüssen zuzuführen.

Schließlich ist es vorteilhaft, dass zur Höhenverstellbarkeit der Medienanschlüsse der Deckenkanal oder die Deckenkanäle absenkbar und herauffahrbar ausgebildet ist/sind. Bei dieser Ausführungsform befinden sich die Medienanschlüsse direkt an den Deckenkanälen oder sind über Säulen oder Traversen fest an den Deckenkanälen angeordnet, wobei eine Absenkbarkeit oder Herauffahrbarkeit der Deckenkanäle dazu führt, dass die Medienanschlüsse in die gewünschte Höhe verbracht werden können. Zum Absenken beziehungsweise zum Herauffahren der Deckenkanäle sind entsprechende Absenkvorrichtungen vorgesehen, die vorzugsweise motorisch angetrieben werden. Alternativ ist auch eine manuelle Absenkbarkeit, beispielsweise mittels eines Kugelgetriebes oder dergleichen, denkbar.

Bevorzugt sind die Medienanschlüsse aus ihrer Übergreifhöhe in die Greifhöhe nur dann absenkbar, wenn dies an zentraler Stelle, beispielsweise an einem Lehrerpult oder dergleichen, mittels einer Zentralsteuerung freigegeben wird. Missbrauch wird dadurch weitestgehend ausgeschlossen.

Bevorzugt befinden sich in den Deckenkanälen Beleuchtungseinrichtungen, sodass eine Doppelfunktion erfüllt wird, indem die Deckenkanäle einerseits die Medienversorgungsleitungen führen und andererseits die Raumbeleuchtung aufnehmen. Insbesondere dadurch, dass sich die Deckenkanäle in Längserstreckung der Reihen der Arbeitsplätze erstrecken wird eine sehr gute Arbeitsplatzausleuchtung realisiert.

Unter "Deckenkanälen" sind im Zuge dieser Anmeldung auch einfache Leitungspritschen oder dergleichen zu verstehen, das heißt, es muss kein wannenförmiger Querschnitt vorliegen.

Die Zeichnungen veranschaulichen die Erfindung anhand eines Ausführungsbeispiels und zwar zeigt:
- Figur 1: eine schematische Draufsicht auf ein Technikraum mit einer Technikraumausstattung und
- Figur 2: eine Frontalansicht auf den Technikraum der Figur 1.

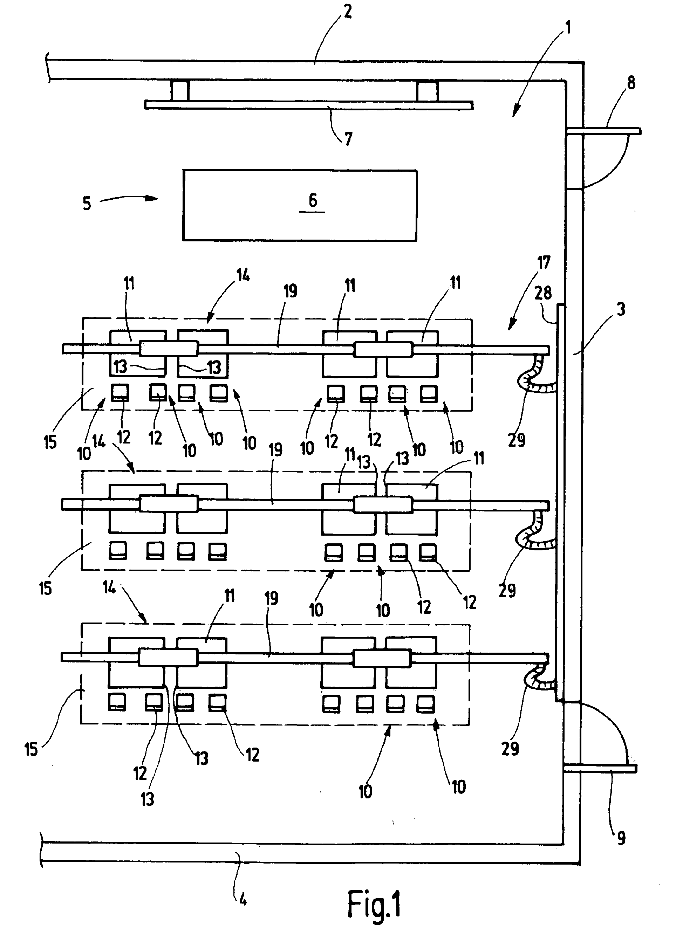

Die Figur 1 zeigt einen Technikraum 1, der eine Frontwand 2, eine Seitenwand 3 und eine Rückwand 4 aufweist. Eine weitere Seitenwand ist vorhanden, jedoch in Figur 1 nicht dargestellt.

Der Technikraum 1 weist einen Lehrerbereich 5 auf, das heißt, dort befindet sich eine unterrichtende Person, die beispielsweise an einem Lehrerpult 6 Platz nehmen kann. Die Frontwand 2 ist mit einer Wandtafel 7 versehen. Die Seitenwand 3 besitzt zwei Türen 8 und 9, durch die der Technikraum 2 betreten beziehungsweise verlassen werden kann. Die Tür 8 befindet sich in einer zum Lehrerbereich 5 gehörenden Zone; die Tür 9 ist nahe der Rückwand 4 angeordnet.

Im Technikraum 1 sind mehrere Arbeitsplätze 10 angeordnet. Jeder Arbeitsplatz besteht aus einem Anteil an einem Tisch 11 sowie einen dazugehörigen Stuhl 12. Im Falle eines Klassenraumes handelt es sich bei den Tischen 11 um sogenannte Schülertische. Der Figur 1 zu entnehmen, dass jeweils zwei Tische 11 benachbart zueinander mit ihrem Querseiten 13 einander gegenüberliegen, sodass Doppeltischanordnung 14 gebildet werden. Jeweils zwei Doppeltischanordnungen 14 sind nebeneinander stehend im Technikraum 1 aufgestellt. Die Folge ist, dass die dort ausgebildeten Arbeitsplätze 10 hinsichtlich der jeweils beiden nebeneinander stehenden Doppeltischanordnungen 14 Reihen 15 bilden. Der Figur 1 ist zu entnehmen, dass drei Reihen 15 ausgebildet werden, wobei jede Reihe 15 zwei Doppeltischanordnungen 14 aufweist, sodass vier Tische 11 pro Reihe 15 vorhanden sind und an jedem Tisch 11 zwei Arbeitsplätze 10 liegen. Jede Reihe 15 erstreckt sich parallel zur Frontwand 2; die Stühle 12 befinden sich auf den der Wandtafel 7 abgewandten Seite der Tische 11. Demzufolge verläuft die Blickrichtung von an den Arbeitsplätzen 10 sitzenden Person quer zu den Längserstreckungen der Reihen 15, also im Wesentlichen parallel zur Längserstreckung der Seitenwand 3.

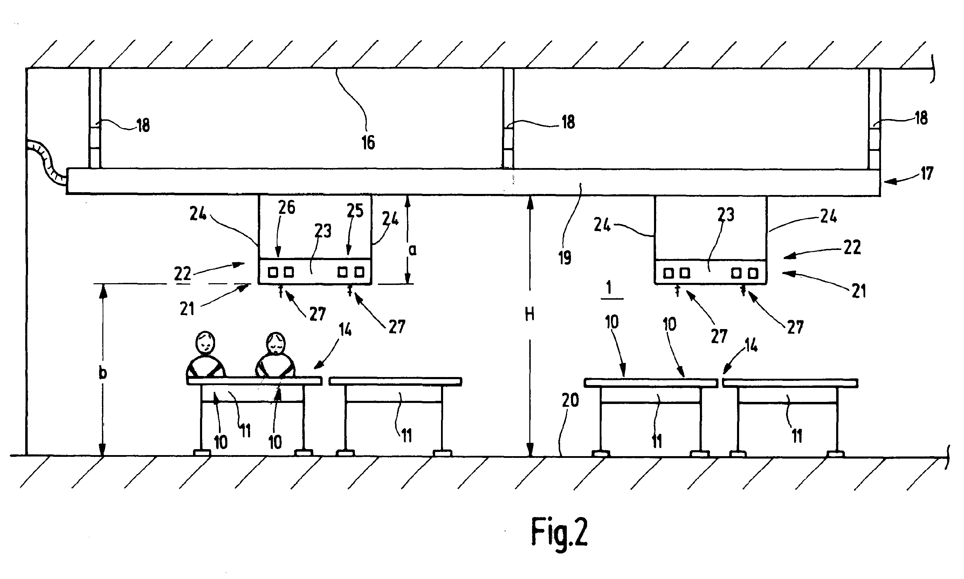

Im Bereich der Decke 16 des Technikraums 1 (Figur 2) ist ein Medienversorgungssystem 17 angeordnet. Das Medienversorgungssystem 17 weist Hängehalter 18 auf, die mit ihren einen Enden an der Decke 16 befestigt sind und mit ihren anderen, unteren Enden Deckenkanäle 19 tragen. Insgesamt sind -gemäß Figur 1- drei Deckenkanäle 19 vorgesehen, wobei jeder Deckenkanal 19 einer Reihe 15 zugeordnet ist. Die Anordnung ist derart getroffen, dass die Längserstreckung der Deckenkanäle 19 parallel oder im Wesentlichen parallel zur Längserstreckung der Reihen 15 verlaufen. Die Deckenkanäle 19 verlaufen demgemäß parallel zur Wandtafel 7. Aus der Draufsicht der Figur 1 ist erkennbar, dass sich jeweils ein Deckenkanal 19 über die nebeneinander angeordneten Tische 11 erstreckt, wobei sie sich -gemäß Figur 2- auf einer Höhe H befinden, die größer als 2 m ist, insbesondere etwa 2,20 m beträgt. Die Höhe H ist der Abstand zwischen der Unterseite der Deckenkanäle 19 und dem Fußboden 20 des Technikraums 1. An dem jeweiligen Deckenkanal 19 sind zwei seitlich beabstandet zueinander liegende Traversen 21 angeordnet. Jede Traverse 21 ist eine Doppeltischanordnung 14 derart zugeordnet, dass sie sich über einen Teilabschnitt jedes Tisches 11 der Doppeltischanordnung 14 erstreckt. Die Traversen 21 sind als Horizontaltraversen 22 ausgebildet. Sie weisen jeweils einen Traversenkörper 23 auf. Die beiden Endbereiche jedes Traversenkörpers 23 werden mittels Halterungen 24 am zugehörigen Deckenkanal 19 gehalten. Der Abstand a zwischen der Unterseite des Deckenkanals 19 und der Unterseite der Horizontaltraverse 22 beträgt vorzugsweise etwa 40 bis 80, insbesondere 60 cm. Dies hat zur Folge, dass das Maß b zwischen dem Fußboden 20 des Technikraums 1 und der Unterseite der Horizontaltraverse 22 1,4 bis 1,8, vorzugsweise 1,6 m beträgt.

In den beiden Endzonen 25 und 26 jeder Horizontaltraverse 22 sind Medienanschlüsse 27 angeordnet. Bei den Medienanschlüssen 27 handelt es sich beispielsweise um Elektroanschlüsse, Computerdatenanschlüsse, Antennenanschlüsse, Gasanschlüsse, Druckluftanschlüsse und/oder Flüssigkeitsanschlüsse. Mehrere Medienanschlüsse 27 sind bevorzugt als Medienanschlussfeld zusammengefasst.

Der Figur 2 ist zu entnehmen, dass stets ein derartiges Anschlussfeld oberhalb eines Tisches 11 einer Doppeltischanordnung 14 liegt und demzufolge den jeweils beiden Arbeitsplätzen 10 eines Tisches 11 zugeordnet sind. Medienversorgungsleitungen, die zu den Medienanschlüssen 27 führen, werden zentral eingespeist, das heißt, sie werden innerhalb eines Wandkanals 28, der sich an der Seitenwand 3 des Technikraums 1 befindet, verlegt und in Form einer Übergangsschlaufe 29 jeweils in den Endbereich der Deckenkanäle 19 eingeführt. Sie verlaufen innerhalb der Deckenkanäle 19 bis zu der jeweiligen Traverse 21. Dort sind sie entlang einer der Halterungen 24 bis in den Traversenkörper geführt und an die Medienanschlüsse 27 angeschlossen.

Aus den Figuren 1 und 2 ist zu entnehmen, dass die Längserstreckung jeder der Horizontaltraversen 22 parallel verläuft zu den Längserstreckungen der Deckenkanäle 19.

Alternativ zum aus der Figur 2 hervorgehenden Ausführungsbeispiel kann auch vorgesehen sein, dass für eine Verstellbarkeit der Höhe der Medienanschlüsse 27 der jeweilige Deckenkanal 19 und/oder die jeweilige Horizontaltraverse 22 absenkbar beziehungsweise herauffahrbar mittels geeigneter Absenk-Vorrichtungen ausgebildet ist/sind. Im Falle einer Absenkbarkeit der Deckenkanäle 19 sind die Übergangsschlaufen 29 flexibel gestaltet.

Insbesondere kann vorgesehen sein, dass mindestens einer der Deckenkanäle 19 eine Projektoreinrichtung, insbesondere ein Beamer, aufnimmt, um mittels einer Leinwand oder dergleichen, die sich im Bereich der Wandtafel 7 befindet, eine Projektionseinrichtung zu bilden. Diese Projektionseinrichtung lässt sich aufgrund des Querverlaufes der Deckenkanäle 19 im Wesentlichen mittig zur Frontwandlängserstreckung 2 anordnen, sodass von allen Arbeitsplätzen 10 her das projizierte Bild gut sichtbar ist.

## Patentansprüche

1. Technikraumausstattung mit mehreren Arbeitsplätzen, von denen mehrere als Reihe nebeneinander und die als mehrere Reihen hintereinanderliegend angeordnet sind, und mit einem an oder unterhalb der Decke des Raumes angeordneten Medienversorgungssystem, das mehrere Deckenkanäle zur Aufnahme von Medienversorgungsleitungen aufweist, die zu den Arbeitsplätzen zugeordneten Medienanschlüssen des Medienversorgungssystems führen, **dadurch gekennzeichnet, dass** die Längserstreckung der Deckenkanäle (19) parallel oder im Wesentlichen parallel zur Längserstreckung der Reihen (15) verläuft.

2. Technikraumausstattung nach Anspruch 1, **dadurch gekennzeichnet, dass** die Medienanschlüsse (27) an den Deckenkanälen (19) angeordnet sind.

3. Technikraumausstattung nach einem der vorhergehenden Ansprüche, **dadurch gekennzeichnet, dass** die Medienanschlüsse (27) höhenverstellbar angeordnet sind.

4. Technikraumausstattung nach einem der vorhergehenden Ansprüche, **dadurch gekennzeichnet, dass** die Medienanschlüsse (27) an Säulen und/oder Traversen (21) angeordnet sind.

5. Technikraumausstattung nach einem der vorhergehenden Ansprüche, **dadurch gekennzeichnet, dass** sich die Säulen zumindest in Arbeitsposition in Richtung auf die Arbeitsplätze erstrecken.

6. Technikraumausstattung nach einem der vorhergehenden Ansprüche, **dadurch gekennzeichnet, dass** die Traversen (21) als Horizontaltraversen (22) ausgebildet sind.

7. Technikraumausstattung nach einem der vorhergehenden Ansprüche, **dadurch gekennzeichnet, dass** die Säulen und/oder die Traversen (21) für die Höhenverstellbarkeit der Medienanschlüsse (27) verlagerbar sind.

8. Technikraumausstattung nach einem der vorhergehenden Ansprüche, **dadurch gekennzeichnet, dass** die Säulen und/oder die Traversen (21) verschwenkbar gelagert sind.

9. Technikraumausstattung nach einem der vorhergehenden Ansprüche, **dadurch gekennzeichnet, dass** die Säulen für die Höhenverstellbarkeit der Medienanschlüsse (27) entlang ihrer Längserstreckung verlagerbar geführt und/oder entlang ihrer Längserstreckung teleskopierbar sind.

10. Technikraumausstattung nach einem der vorhergehenden Ansprüche, **dadurch gekennzeichnet, dass** die Höhenverstellbarkeit der Medienanschlüsse (27) von einer Position in Übergreifhöhe bis in eine Position in Greifhöhe ausgebildet ist.

11. Technikraumausstattung nach einem der vorhergehenden Ansprüche, **dadurch gekennzeichnet, dass** die Säulen und/oder Traversen (21) an den Deckenkanälen (19) oder im Bereich der Deckenkanäle (19) angeordnet sind.

12. Technikraumausstattung nach einem der vorhergehenden Ansprüche, **dadurch gekennzeichnet, dass** zur Höhenverstellbarkeit der Medienanschlüsse (27) die Deckenkanäle (19) absenkbar und herauffahrbar ausgebildet sind.

13. Technikraumausstattung mit mehreren Arbeitsplätzen, von denen mindestens einige als Reihe nebeneinander liegend angeordnet sind, und mit einem an oder unterhalb der Decke des Raumes angeordneten Medienversorgungssystem, das mindestens einen Deckenkanal zur Aufnahme von Medienversorgungsleitungen aufweist, die zu den Arbeitsplätzen zugeordneten Medienanschlüssen des Medienversorgungssystems führen, **dadurch gekennzeichnet, dass** die Längserstreckung der Deckenkanäle quer, insbesondere rechtwinklig, zu der Blickrichtung von sich an den Arbeitsplätzen aufhaltenden Personen verläuft.
